# FASCICULE DE BREVET EUROPEEN

(11) **EP 0 388 287 B1**
(45) Date de publication et mention de la délivrance du brevet: **18.08.1993**
(21) Numéro de dépôt: 90400671.5
(22) Date de dépôt: 14.03.1990
(51) Int. Cl.: A01G 31/00

(54) **Substrat pour culture hors-sol**
Substrat für erdlose Kultur
Substrate for soilless culture

(30) Priorité: 15.03.1989 FR 8903372
(43) Date de publication de la demande: 19.09.1990
(73) Titulaire: ISOVER SAINT-GOBAIN, F-92400 Courbevoie (FR)
(72) Inventeur: Kafka, Bernard, F-60290 Rantigny (FR)
(74) Mandataire: Luziau, Nelly

(56) Documents cités:
- EP-A- 0 133 083
- WO-A-87/00394
- WO-A-89/01736
- US-A- 4 777 763

## Description

La présente invention concerne un substrat pour culture hors-sol présentant des propriétés satisfaisantes pour la culture des plantes.

Il est important, pour la croissance des plantes, que le substrat contienne de l'air et puisse absorber et retenir l'eau ou des solutions aqueuses nutritives.

On a proposé, pour la culture hors-sol, des substrats formés d'un feutre de fibres minérales, telles que de la laine de roche ou de verre, car ces substrats présentent l'avantage d'être très poreux, les fibres occupant généralement au plus 5 % du volume total des substrats. Ils peuvent servir de support des racines, de réserve d'air et d'eau ou de solutions nutritives ; d'autre part, ils sont légers et inertes chimiquement.

Il est connu que différents substrats sont nécessaires pour la culture des plantes et qu'ils dépendent de l'état de croissance de ces plantes. En effet, au fur et à mesure du développement des plantes, les substrats doivent avoir un volume plus grand et une structure permettant de leur offrir les éléments dont elles ont besoin (eau, air, solutions nutritives) et la place suffisante pour le développement des racines.

Actuellement, la culture hors-sol en serre comprend au moins deux étapes. La première correspond à la croissance des plants et demande des substrats appelés souvent cubes, peu volumineux, leur système racinaire étant peu développé. Au cours de la deuxième étape, les substrats de faible volume sont placés sur des substrats de volume plus important, aussi appelés "pains", pour permettre un développement plus complet des racines et une bonne croissance des plantes. Les substrats "pains" portent, en général, plusieurs petits substrats dits "cubes".

La présente invention concerne plus particulièrement cette deuxième catégorie de substrat (les "pains") qui, non seulement doit offrir aux plantes, un volume suffisant au développement des racines, mais aussi la quantité d'eau et d'air nécessaire à leur croissance et cela pour plusieurs plantes.

La rétention d'eau, ou hydrorétention, d'un substrat est une caractéristique importante pour la conduite de la culture des plantes. Les conditions d'humidité peuvent varier suivant différents facteurs tels que le type de plantes à cultiver, le climat, les saisons, le stade de développement de la plante. Quelles que soient les conditions d'humidité désirées pour un type particulier de substrat, il est nécessaire que l'eau soit absorbée et retenue dans une certaine mesure par le substrat : il ne faut pas qu'elle s'écoule immédiatement, mais elle doit cependant rester disponible pour la plante. En effet, l'eau ou la solution trop fortement liée au substrat ou s'écoulant trop vite ne peut pas être utilisée par la plante dans de bonnes conditions.

On sait que l'hydrorétentivité est liée à la capillarité du feutre constituant le substrat. La capillarité dépend du diamètre des fibres, donc de leur finesse, et de la masse volumique du feutre obtenu à partir de ces fibres.

Pour une même masse volumique, l'hydrorétentivité d'un feutre augmente avec la finesse des fibres. Avec des feutrés qui contiennent des fibres de même diamètre moyen, l'hydrorétentivité augmente lorsque la masse volumique augmente.

Suivant le type de plantes à cultiver, il peut être avantageux d'utiliser des substrats de structure différente dans laquelle on peut faire varier, notamment la masse volumique et le diamètre des fibres.

Par exemple, un substrat présentant une rétention d'eau élevée devrait contenir des fibres de faible diamètre et présenter une masse volumique élevée.

Si, pour une bonne croissance, la plante a besoin d'eau, elle demande aussi de l'air. Des substrats de masse volumique élevée, qui présentent une bonne rétention d'eau, utile à la plante, comprennent une réserve d'air qui peut être insuffisante.

Pour augmenter la capacité d'aération des racines contenues dans le substrat, il est possible par exemple de former des passages d'air dans le substrat en pratiquant des trous dans l'épaisseur du substrat. Il est possible aussi de diminuer la masse volumique du substrat, en tenant compte du fait, cependant, qu'une diminution de la masse volumique entraîne une diminution de la rétention d'eau.

Cependant, la présence de trous dans le substrat ou bien une faible masse volumique peut diminuer la résistance mécanique du substrat. En particulier, lorsqu'un substrat de faible masse volumique (pour augmenter sa réserve d'air) comprend des fibres de faible diamètre, ce qui permet d'augmenter le phénomène de capillarité et, par conséquent, l'hydrorétentivité du substrat, sa résistance mécanique est diminuée. Lorsqu'ils ont été imbibés d'eau, ces substrats peuvent s'affaisser, et cela d'autant plus lorsque le substrat est utilisé comme "pains" portant plusieurs "cubes". Les pertes en épaisseur, qui en résultent, entraînent notamment une diminution de la réserve d'air et ces pertes en épaisseur sont d'autant plus élevées que le substrat a une masse volumique plus faible et des fibres de diamètre plus petit.

On a donc cherché à fabriquer des substrats pour culture hors-sol qui présentent une résistance mécanique suffisante pour subir un affaissement minimum lors de la dépression hydrique, tout en présentant une rétention d'eau et une réserve d'air suffisantes pour un bon développement des racines et une croissance satisfaisante des plantes.

L'invention propose un substrat pour culture hors-sol ayant ces propriétés.

Le substrat pour culture hors-sol, selon l'invention, est formé de fibres minérales liées par un liant résineux réticulé thermiquement (comme décrit dans W 089/01736) et se caractérise en ce qu'il est constitué par un feutre de fibres minérales crêpées de masse volumique inférieure à 60 kg/m³, renfermant le cas échéant un agent mouillant, le crêpage pouvant être obtenu par au moins une compression longitudinale continue, à un taux compris entre 1,5 et 15, d'une nappe de fibres minérales dans laquelle les fibres, à l'origine, ont une tendance à se disposer suivant des couches ou strates parallèles aux faces inférieure et supérieure de cette nappe, la compression ayant lieu avant le traitement thermique de la nappe servant à réticuler le liant.

Par "**compression longitudinale continue**", on entend que la nappe de fibres minérales, servant à fabriquer le feutre, a subi, avant le traitement thermique pour réticuler le liant, au moins une compression, en continu, par passage entre des paires de convoyeurs délimitant ses faces inférieures et supérieures, la vitesse de chaque paire de convoyeurs étant inférieure à celle des paires de convoyeurs précédents.

Par "**taux de compression**", on entend le rapport de la masse de fibres par unité de surface après et avant compression.

La nappe de fibres minérales est formée, comme il est usuel notamment dans la fabrication de produits fibreux isolants, par dépôt de fibres minérales véhiculées par un courant gazeux sur un tapis convoyeur qui est perméable au gaz et retient les fibres. Les fibres se déposent sous forme de strates pratiquement parallèles au plan du tapis convoyeur et dans lesquelles elles ont une orientation quelconque. La face inférieure de la nappe résulte du tassement des fibres au contact du tapis qui se déposent donc pratiquement parallèlement à cette face.

Le traitement de compression correspond à un crêpage de la nappe de fibres minérales qui présente alors, dans l'épaisseur de celle-ci suivant une section longitudinale correspondant à la direction de déplacement de la nappe sur le tapis convoyeur, des petites boucles ou ondulations enchevêtrées. Ces petites ondulations peuvent être observées grâce à une faible variation de couleur des fibres due à la présence du liant.

Le taux de compression appliquée à la nappe de fibres minérales, dépend de la qualité des fibres, notamment de leur diamètre. Pour un substrat selon l'invention, ce taux est supérieur à 1,5 car, pour un taux inférieur, le crêpage est insuffisant pour obtenir un effet de petites ondulations important, conférant au substrat une résistance mécanique élevée et une possibilité de meilleur développement des racines dans l'épaisseur du substrat. Le taux de compression est de préférence inférieur à 7 et il est particulièrement d'environ 4 à 5.

A la compression longitudinale, on peut associer une compression dans le sens de l'épaisseur qui peut être effectuée en continu et, de préférence, de manière progressive.

Lorsque le feutre comporte un agent mouillant, ce qui est le cas lorsqu'il ne présente pas intrinsèquement un caractère hydrophile suffisant, cet agent peut être introduit de manière connue en soi, par exemple comme décrit dans la publication du brevet EP-A-099 801.

Le substrat selon l'invention présente une résistance mécanique améliorée. Il est en particulier plus résistant à un affaissement lorsqu'il est imbibé de solution.

D'autre part, suivant la direction de découpe de la nappe traitée pour former les substrats et la rotation éventuelle de 90° de ces substrats, changeant ainsi les directions respectives des faces du feutre dans le substrat, on peut mettre à profit les caractéristiques de structure suivant les directions considérées par exemple pour favoriser le développement des racines , dans toute leur épaisseur, les ondulations enchevêtrées, empêchant leur progression rapide dans le sens de la gravité. Cela est particulièrement observé avec des substrats résultant d'une découpe transversale ou longitudinale par rapport à la direction de déplacement de la nappe sur le tapis convoyeur.

Les feutres de fibres minérales qui sont utiles comme substrats pour la culture hors-sol, ont de préférence des densités inférieures à 60 kg/m³ et, en particulier, comprises entre 15 et 30 kg/m³ et contiennent des fibres de diamètre généralement compris entre 2 µm et 12 µm et, avantageusement, inférieur à 8 µm, afin de présenter une hydrorétentivité satisfaisante pour la croissance des plantes. Un substrat ayant une hydrorétentivité appropriée pour la culture des plantes contient au moins 50 % environ d'eau, pour une dépression de 10 cm d'eau. Pour déterminer la quantité d'eau que retient un substrat, appelée hydrorétentivité, on le soumet, après l'avoir imbibé d'eau, à des forces de succion et on détermine sa teneur en eau en fonction de ces forces. On définit ainsi, pour une dépression donnée, exprimée en centimètre d'eau, le volume d'eau qui est contenu dans le substrat et qui représente un certain pourcentage du volume du substrat.

Aux planches des dessins annexés, donné seulement à titre d'exemple :
- La figure 1 représente schématiquement et en perspective une coupe d'un échantillon témoin de feutre obtenu sans compression longitudinale.
- La figure 2 représente schématiquement et en perspective une coupe d'un échantillon de feutre obtenu avec compression longitudinale et utile comme substrat hors-sol, selon l'invention. On a indiqué les directions de découpes longitudinales x et transversales y.
- La figure 3 représente la courbe de déformation relative (%) en fonction d'une contrainte (kN/m²) appliquée sur un échantillon témoin A obtenu sans compression longitudinale et sur un échantillon B, utile comme substrat hors-sol selon l'invention, ayant subi une compression longitudinale.
- La figure 4 représente un schéma général d'une installation utilisable pour former des feutres utiles comme substrat hors-sol selon l'invention.

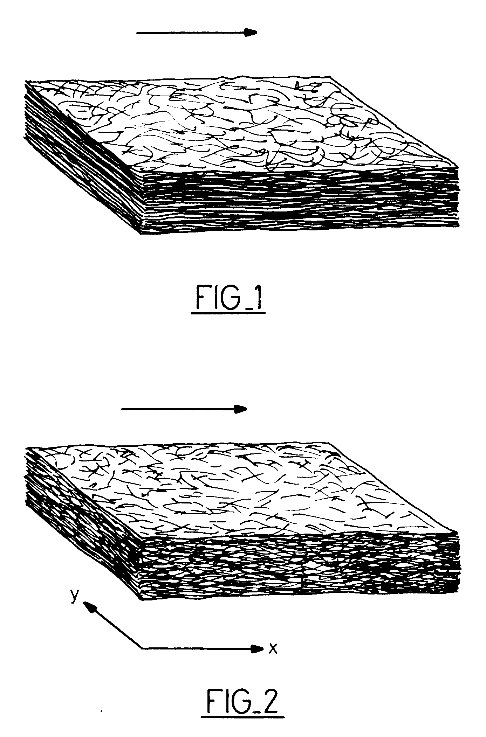

Comme le montre la figure 1, les fibres d'un feutre conventionnel, qui n'a subi qu'une compression dans le sens de l'épaisseur, se disposent, d'une manière préférentielle, parallèlement aux faces du feutre. La disposition des fibres est sensiblement la même que l'on considère le feutre dans le sens longitudinal, désigné par la flèche, ou dans le sens transversal (par rapport au tapis convoyeur sur lequel le feutre est constitué). Ce type de feutre, se comprime facilement dans le sens de l'épaisseur, particulièrement pour les faibles densités.

La figure 2 représente un feutre qui a subi une compression longitudinale avant le traitement thermique servant à réticuler la composition de liant. Longitudinalement, on constate de petites boucles ou ondulations enchevêtrées ; les fibres sont disposées suivant des directions aléatoires. Transversalement, la position dominante des fibres reste, d'une façon typique, parallèle aux faces supérieure et inférieure du feutre. Cette structure, comme indiquée précédemment, permet un développement important des racines dans toute l'épaisseur du substrat et une meilleure résistance mécanique.

Un procédé pour former un feutre de fibres minérales, utile comme substrat pour la culture hors-sol selon l'invention, est décrit par exemple à la demande de brevet européen A-133 083. La nappe de fibres minérales est formée par le dépôt de fibres sur le tapis convoyeur, comme indiqué précédemment.

Une composition de liant est appliquée sur les fibres lors de leur trajet vers le tapis convoyeur. La nappe, éventuellement comprimée dans le sens de l'épaisseur, est soumise à au moins une compression longitudinale en continu par passage entre des paires de convoyeurs, la vitesse de chaque paire de convoyeurs diminuant dans le sens de déplacement de la nappe. La nappe est alors traitée thermiquement pour réticuler le liant et fixer la structure du feutre obtenu.

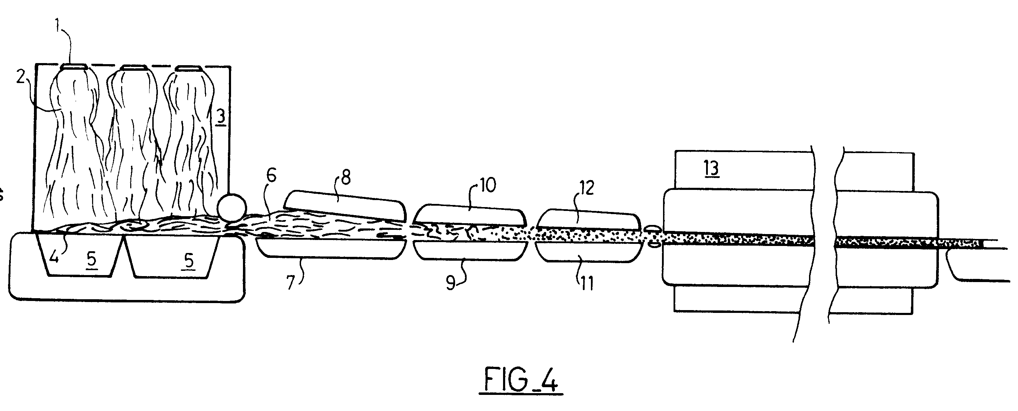

La figure 4 représente un schéma d'une installation utilisable pour fabriquer des feutres de fibres minérales utiles comme substrat pour la culture hors-sol et décrite à la demande de brevet européen EP-A-133 083.

Ce schéma fait apparaître trois parties bien distinctes, celle dans laquelle le feutre est formé à partir des fibres, celle dans laquelle le feutre est compressé longitudinalement et enfin la partie dans laquelle le feutre est traité thermiquement pour réticuler le liant.

L'installation de formation des fibres est représentée schématiquement par trois dispositifs de centrifugation 1. La formation des fibres n'est liée à aucun mode particulier. Le mode auquel il est fait référence est seulement celui qui, au plan industriel, est le plus largement utilisé pour la formation de fibres de verre, mais d'autres modes sont également possibles, notamment ceux utilisés habituellement pour la formation de laine de roche et qui font intervenir un ensemble de roues de centrifugation sur la paroi périphérique desquelles le matériau est amené pour être accéléré et projeté sous forme de fibres.

Trois dispositifs de centrifugation 1 sont montés en série. Dans les installations importantes, le nombre de centrifugeurs peut atteindre ou même dépasser la dizaine.

Les fibres produites par chacun des dispositifs de centrifugation 1 forment à l'origine un voile annulaire 2. Elles sont entraînées par les courants gazeux vers la partie inférieure de la chambre de réception (3) où se situe un tapis convoyeur (4) perméable au gaz et retenant les fibres. La circulation des gaz est assurée par une aspiration entretenue sous le tapis convoyeur (4) à partir des caissons (5) en dépression par rapport à l'atmosphère de la chambre (3).

Les fibres se déposent sur le tapis convoyeur en une épaisseur qui va en s'accroissant jusqu'à la sortie de la chambre de réception.

A l'intérieur de la chambre, des moyens non représentés projettent sur les fibres une composition liquide de liant.

La nappe (6) sortant de la chambre (3) est ordinairement relativement légère. Sa masse volumique moyenne est faible pour une épaisseur importante. Par ailleurs, en raison du mode de formation du feutre, les fibres se sont déposées sous forme de strates, pratiquement parallèles au plan du tapis convoyeur, dans lesquelles elles ont une orientation quelconque. Par une succession de modifications, cette nappe va être conduite à une masse volumique très sensiblement accrue et à une orientation des fibres différente.

Ces modifications peuvent comprendre une compression de la nappe dans le sens de l'épaisseur. Cette compression peut être obtenue, par exemple, comme il est montré sur la figure 4, en faisant passer la nappe 6 entre deux convoyeurs (7) et (8). La distance séparant les deux convoyeurs va de préférence en diminuant progressivement dans le sens de défilement de la nappe, pour éviter de détériorer les fibres.

La compression dans le sens de l'épaisseur de la nappe peut cependant avoir lieu sur tout le trajet de la nappe avant l'étuve; elle peut varier progressivement sur tout le trajet de la nappe ou être constante sur une partie du trajet, par exemple en maintenant constante la distance entre deux convoyeurs se faisant face. Elle peut varier aussi d'une paire de convoyeurs à l'autre, et par exemple, diminuer, puis augmenter, suivant l'effet de compression souhaité.

La nappe passe ensuite entre des paires de convoyeurs (9, 10) et (11, 12), la vitesse de chaque paire étant inférieure à celle des paires de convoyeurs précédents, ce qui occasionne une compression longitudinale continue de la nappe.

La nappe est ensuite directement introduite dans l'étuve (13) où le traitement thermique assure la réticulation du liant et la stabilisation du produit.

A la sortie de l'étuve (13), le feutre obtenu est découpé et conditionné en fonction des utilisations envisagées.

La structure du feutre obtenu dépend notamment de la masse volumique de la nappe de fibres et de son épaisseur. Le réglage de la distance entre deux convoyeurs qui se font face permet de fixer la masse volumique et l'épaisseur, compte tenu de l'épaisseur initiale de la nappe à la sortie de la chambre de réception (3) et de celle que doit avoir la nappe à l'entrée de l'étuve (13).

Pour plus de détails sur un procédé et un dispositif utilisables pour obtenir un feutre utile pour la production de substrat hors-sol selon l'invention, on se reportera à la demande de brevet européen A 133 083, mentionnée précédemment.

La compression dans le sens de l'épaisseur de la nappe, associée à la compression longitudinale, permet de former un feutre qui comprend des couches superficielles supérieure et inférieure dans lesquelles les fibres sont orientées pratiquement parallèlement au plan du tapis convoyeur. La couche superficielle inférieure résulte du tassement des fibres au contact du tapis convoyeur. La couche superficielle supérieure résulte de la compression dans le sens de l'épaisseur. La présence de ces deux couches superficielles contribuent au réarrangement des fibres à l'intérieur du feutre, suivant des directions aléatoires, lors de la compression longitudinale.

De tels feutres, utilisés comme substrats pour la culture hors-sol, favorisent, par la présence de ces couches superficielles contenant des fibres orientées pratiquement parallèlement au plan du tapis convoyeur, l'étalement de l'eau ou de la solution nutritive sur toute la surface du substrat.

Les exemples suivants, non limitatifs, illustrent l'invention.

Les exemples correspondent respectivement à un substrat témoin A, formé à partir d'un feutre qui n'a pas été comprimé longitudinalement (figure 1) et à un substrat B selon l'invention, formé à partir d'un feutre, qui a été comprimé longitudinalement, tel que représenté à la figure 2.

Les substrats A et B sont formés de fibres de verre de diamètre moyen égal à 6 µm.

Le substrat témoin A est constitué d'un feutre de fibres de verre discontinues obtenu de manière usuelle, c'est-à-dire que la nappe de fibres de verre formée sur le tapis convoyeur est comprimée dans le sens de l'épaisseur et traitée thermiquement pour former un feutre. Sa masse volumique est égale à 28 kg/m³.

Le feutre dont provient le substrat B selon l'invention est fabriqué par le procédé décrit à la demande de brevet européen A 133 083 et mis en oeuvre dans une installation telle que représentée schématiquement à la figure 4.

Les vitesses des différents convoyeurs sont réglées pour avoir un taux de compression final de 4. La vitesse de l'organe de réception et du premier groupe (7, 8) de convoyeurs est de 30 m/mn. La vitesse du deuxième groupe (9, 10) de convoyeurs est de 14 m/mn, celle du troisième groupe (11, 12) de 6 m/mn. La vitesse de déplacement du feutre dans l'étuve est de 6 m/mn. La distance entre les deux convoyeurs du premier groupe est constante et égale à 100 mm, celle entre les convoyeurs du deuxième groupe de 120 mm, et celle entre les convoyeurs du troisième groupe de 80 mm. Après passage dans l'étuve, on obtient un feutre ayant une masse volumique de 22 kg/m³.

L'épaisseur nominale des deux substrats A et B est de 75 mm.

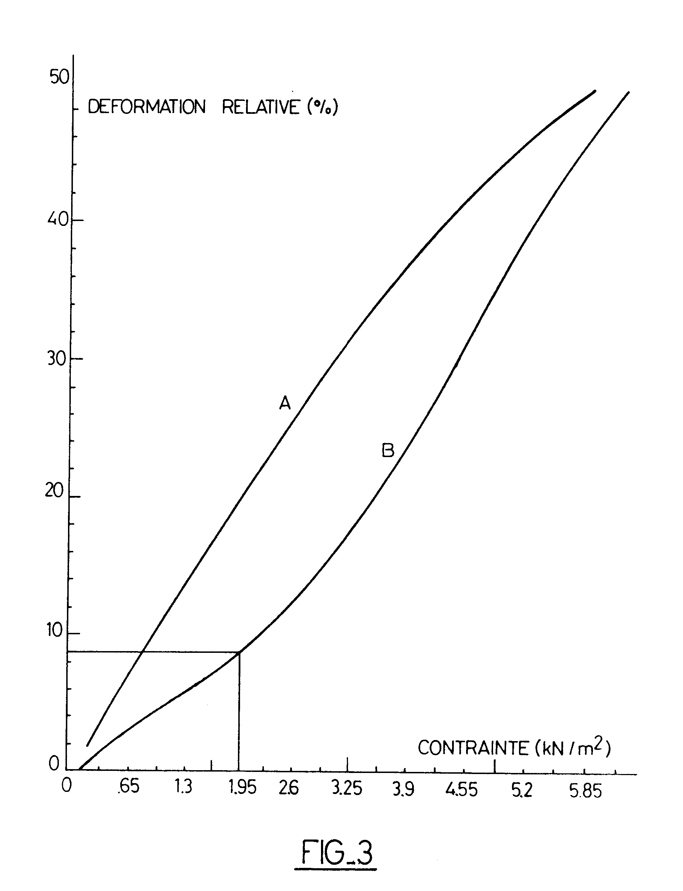

On évalue la résistance à la compression de ces deux substrats en examinant leur déformation relative (en %) en fonction d'une contrainte (en KN/m²). Voir figure 3.

Ce test est effectué en soumettant des échantillons de 0,16 m² à différentes pressions en utilisant un dynamomètre Instron 1195.

On peut constater, sur la figure 3, que, soumis à une même contrainte, au moins pour les faibles valeurs, le substrat A témoin se déforme plus que le substrat B selon l'invention, bien qu'ayant une masse volumique (28 kg/m³) plus élevée.

Le substrat B, selon l'invention, est donc plus résistant à la compression, ce qui le rend avantageusement utilisable pour la culture hors-sol. En effet, comme on l'a déjà indiqué, le fait qu'il soit plus résistant mécaniquement, le rend plus résistant à l'affaissement lorsqu'il est imbibé d'eau ou de solution. Le substrat conserve donc mieux les caractéristiques initiales et, en particulier, le rapport air/eau nécessaire pour un bon développement des racines et une croissance satisfaisante des plantes. En outre, des substrats à résistance mécanique améliorée peuvent être obtenus avec des feutres de faible masse volumique (par exemple 22 kg/m³) et contenant des fibres de diamètre moyen relativement faible (6 µm). Ainsi, la présente invention fournit des substrats, utilisables notamment comme "pains" pouvant recevoir plusieurs cubes, qui, non seulement, contiennent une plus grande réserve d'air, mais aussi présentent une bonne hydrorétentivité, caractéristiques qui permettent un meilleur développement des racines et une meilleure croissance de la plante.

## Revendications

1. Substrat pour culture hors-sol formé de fibres minérales liées par un liant résineux réticulé thermiquement, caractérisé en ce qu'il est constitué par un feutre de fibres minérales crêpées renfermant, le cas échéant, un agent mouillant, en ce que le feutre a une masse volumique inférieure à 60 kg/m³, et est susceptible d'être obtenu par au moins une compression longitudinale continue, à un taux compris entre 1,5 et 15, d'une nappe de fibres minérales dans laquelle les fibres ont, à l'origine, une tendance à se disposer suivant des couches ou strates parallèles aux faces inférieure et supérieure de la nappe, la compression ayant lieu avant le traitement thermique de la nappe réticulant le liant.

2. Substrat conforme à la revendication 1, caractérisé en ce que la diamètre moyen des fibres est compris entre 2 µm et 12 µm.

3. Substrat conforme à la revendication 1 ou à la revendication 2, caractérisé en ce que le feutre a une masse volumique comprise entre 15 et 30 kg/m³.

4. Substrat conforme à l'une des revendications 1 à 3, caractérisé en ce qu'il est constitué d'un feutre susceptible d'être obtenu par compression longitudinale continue à un taux inférieur à 7, particulièrement d'environ 4-5.

5. Substrat conforme à l'une des revendications 1 à 4, caractérisé en ce qu'il est constitué d'un feutre susceptible d'être obtenu par compression longitudinale continue et compression dans le sens de l'épaisseur.

6. Substrat conforme à l'une des revendications 1 à 5, caractérisé en ce qu'il est formé de fibres de verre.

## Patentansprüche

1. Substrat für erdelose Kulturverfahren aus Mineralfasern, die durch ein harzartiges, thermisch vernetztes Bindemittel gebunden sind, dadurch gekennzeichnet, daß es aus einem Filz aus gestauchten Mineralfasern besteht, welcher gegebenenfalls ein Netzmittel umfaßt, und daß dieser Filz eine geringere Dichte als 60 kg/m³ hat und durch eine kontinuierliche Kompression einer Mineralfaserbahn zumindest in deren Längsrichtung in einem Verhältnis zwischen 1,5 und 15 herstellbar ist, innerhalb der die Fasern ursprünglich dazu tendieren, sich in Schichten oder Lagen parallel zu der oberen und unteren Fläche dieser Bahn auszurichten, wobei die Kompression vor der Wärmebehandlung der Bahn stattfindet, bei der das Bindemittel vernetzt wird.

2. Substrat nach Anspruch 1, dadurch gekennzeichnet, daß der mittlere Durchmesser der Fasern zwischen 2 und 12 µm liegt.

3. Substrat nach Anspruch 1 oder 2, dadurch gekennzeichnet, daß der Filz eine Dichte zwischen 15 und 30 kg/m³ hat.

4. Substrat nach einem der Ansprüche 1 bis 3, dadurch gekennzeichnet, daß es aus einem Filz besteht, der durch kontinuierliche Kompression in Längsrichtung in einem Verhältnis von 7, insbesondere von ca. 4-5, herstellbar ist.

5. Substrat nach einem der Ansprüche 1 bis 4, dadurch gekennzeichnet, daß es aus einem Filz besteht, der durch kontinuierliche Kompression in Längsrichtung und Kompression in Dickenrichtung herstellbar ist.

6. Substrat nach einem der Ansprüche 1 bis 5, dadurch gekennzeichnet, daß es aus Glasfasern gebildet ist.

## Claims

1. Substrate for soilless cultivation formed of mineral fibres bonded by a thermally crosslinked resin binder, characterised in that it is comprised of a felt of crimped mineral fibres optionally containing a wetting agent; in that the felt has a density of less than 60 kg/m³ and can be obtained by at least one continuous longitudinal compression, at a rate of between 1.5 and 15, of a sheet of mineral fibres in which the fibres originally tend to arrange themselves in layers or strata parallel to the lower and upper surfaces of the sheet, the compression taking place prior to the heat-treatment of the sheet to cross-link the binder.

2. Substrate according to Claim 1, characterised in that the average diameter of the fibres is between 2 µm and 12 µm.

3. Substrate according to Claim 1 or Claim 2, characterised in that the felt has a density of between 15 and 30 kg/m³.

4. Substrate according to any one of Claims 1 to 3, characterised in that it is comprised of a felt which can be obtained by continuous longitudinal compression at a rate lower than 7, in particular approximately 4.5.

5. Substrate according to any one of Claims 1 to 4, characterised in that it is comprised of a felt which can be obtained by continuous longitudinal compression and compression in the direction of its thickness.

6. Substrate according to any one of Claims 1 to 5, characterised in that it is formed of glass fibres.
